# EUROPÄISCHE PATENTSCHRIFT

(11) **EP 3 511 667 B1**
(45) Veröffentlichungstag und Bekanntmachung des Hinweises auf die Patenterteilung: **29.01.2020**
(21) Anmeldenummer: 19150942.1
(22) Anmeldetag: 09.01.2019
(51) Int. Cl.: F28D 20/02, B60H 1/00, C09K 5/06

(54) **LATENTWÄRMESPEICHER SOWIE HEIZANORDNUNG UND VERFAHREN DAZU**
LATENT HEAT STORAGE DEVICE AND HEATING ASSEMBLY AND METHOD FOR SAME
ACCUMULATEUR DE CHALEUR LATENTE AINSI QUE DISPOSITIF DE CHAUFFAGE ET SON PROCÉDÉ

(30) Priorität: 16.01.2018 DE 102018100900
(43) Veröffentlichungstag der Anmeldung: 17.07.2019
(73) Patentinhaber: Konvekta Aktiengesellschaft, 34613 Schwalmstadt-Ziegenhain (DE)
(72) Erfinder: Sonnekalb, Michael, 34613 Schwalmstadt (DE); Best, Pascal, 34633 Ottrau (DE)
(74) Vertreter: Lindinger, Bernhard

(56) Entgegenhaltungen:
- EP-A1- 2 732 993
- WO-A1-2011/072988
- FR-A1- 2 991 106

## Beschreibung

### Gebiet der Technik:

Die Erfindung betrifft einen Latentwärmespeicher gemäß dem Oberbegriff des Anspruchs 1. Ein derartiger Latentwärmespeicher mit einem Behältnis, mit einem oder mehreren Phasenwechselmaterial/ien als alleiniger oder nahezu alleiniger Bestandteil des Wärmespeichermediums sowie mit einem oder mehreren elektrisch betreibbaren Heizelement(en) und mit einer oder mehreren im Behältnis angeordneten in Wärmeleitverbindung zum Wärmespeichermedium stehenden Wärmeleitstruktur(en) ist insbesondere zur Beheizung von elektrisch angetriebenen Fahrzeugen bekannt.

Ferner betrifft die Erfindung eine Heizanordnung mit zumindest einem derartigen Latentwärmespeicher sowie ein Fahrzeug mit einer derartigen Heizanordnung und ein Verfahren zum Beheizen eines Insassenbereichs eines Fahrzeugs.

Ein Latentwärmespeicher arbeitet mit einem Phasenwechselmaterial, das bei Zuführung von Wärme im Bereich seiner Phasenwechseltemperatur einen Wechsel seiner Phase wie beispielsweise vom Aggregatzustand fest zu flüssig durchläuft, und somit sogenannte latente Wärme speichert. Übliche Phasenwechselmaterialien sind Paraffin und Salzhydrat wie Glaubersalz.

### Stand der Technik:

Latentwärmespeicher sind zum Beispiel aus DE 10 2006 037 760 A1, DE 42 44 465 A1 und DE 10 2008 058 712 A1 bekannte. Im Gegensatz dazu enthält die in DE 10 2007 036 299 A1 offenbarte Klimaanlage keinen Latentwärmespeicher. Der in DE 10 2008 058 712 A1 offenbarte Latentwärmespeicher in einer zum Beheizen eines Fahrzeuginnenraums ausgebildeten Heizanordnung mit einem Phasenwechselmaterial als Wärmespeichermedium in einem thermisch isolierten Behältnis umfasst eine elektrisch betreibbare Heizeinrichtung mit wenigstens einem PTC-Heizelement. Jedoch ist bei dem in DE 10 2008 058 712 A1 offenbarten Latentwärmespeicher für die Wärmeleitung in das und aus dem Wärmespeichermedium keine Wärmeleitstruktur vorgesehen, so dass nachteilig die Wärmeverteilung in das und aus dem Phasenwechselmaterial eher ungleichmäßig sowie eher recht langsam und ohne hohe Wärmeleitleistung erfolgt. Hingegen weist der in EP 1 098 157 B1 offenbarte Latentwärmespeicher zwar keine elektrisch betreibbare Heizeinrichtung im Wärmespeichermedium aber als Wärmeleitplatten ausgeformte Wärmeleitstrukturen im Phasenwechselmaterial des Wärmespeichermediums auf. Aber beim nach EP 1 098 157 B1 bekannten Latentwärmespeicher wird über ein Sekundärmedium, das durch Rohre im Wärmespeichermedium strömt, der Wärmeaustausch bewirkt. Der Einsatz derartiger Rohre bewirkt einen hohen Aufwand an Material sowie Gewicht und es besteht die Gefahr von Verstopfung oder Undichtigkeiten. Außerdem darf dabei der Querschnitt senkrecht zur Längsausdehnung der Rohre für eine gute Wärmeübertragung vom Wärmespeichermedium auf das Sekundärmedium nicht zu groß sein. Auch in WO 2017/174803 A1 ist ein Latentwärmespeicher mit einem Phasenwechselmaterial als alleiniger oder nahezu alleiniger Bestandteil des Wärmespeichermediums sowie mit einem oder mehreren elektrisch betreibbaren Heizelement(en) und mit einer oder mehreren im Behältnis angeordneten in Wärmeleitverbindung zum Wärmespeichermedium stehenden Wärmeleitstruktur(en) offenbart. Bei dem dortigen Latentwärmespeicher erfolgt die Wärmeübertragung vom Wärmespeichermedium entweder auf in Rohren durch das Wärmespeichermedium strömendes Sekundärmedium, was die oben zu EP 1 098 157 B1 angeführten Nachteile mit sich bringt, oder die Wärmeübertragung vom Wärmespeichermedium erfolgt durch eine nicht thermisch isolierte Außenwandung des Latentwärmespeichers auf den Raumbereich um den Latentwärmespeicher, was eine dauerhaftere Speicherung der Wärme verhindert sowie die Freiheit der Positionierung des Latentwärmespeichers einschränkt. Insbesondere bei Latentwärmespeichern mit hoher Schmelztemperatur des Phasenwechselmaterials, wie beispielsweise von über 70°C, ist eine Ausführung ohne äußere thermische Isolation ungeeignet. Außerdem sind bei den in WO 2017/174803 A1 offenbarten Ausführungsformen eines Latentwärmespeichers nachteilig die Wärmeleitstrukturen nur darauf ausgelegt, im Wärmespeichermedium zu wirken.

In WO 2011/072988 A1 ist ein Latentwärmespeicher, gemäß dem Oberbegriff von Anspruch 1, der jedoch auch Batteriezellen im Wärmespeichermedium enthält, offenbart. Die im dortigen Latentwärmespeicher enthaltene Heizvorrichtung zum Aufheizen des Wärmespeichermediums verfügt aber über keine zusätzlichen Mittel zur Leitung der Wärme von der Heizeinrichtung in das Wärmespeichermedium. Der im Patentanspruch 1 angegebenen Erfindung liegt das Problem zugrunde, bei einem Latentwärmespeicher mit für das Wärmespeichermedium elektrisch betreibbare(m)/n Heizelement(en), wovon mindestens eines in Wärmeleitverbindung mit wenigstens einer Wärmeleitstruktur steht, Wärme länger als nur kurzzeitig speichern zu können und mit geringerem Material- und Gewichtsaufwand und ohne die Gefahr einer Rohrverstopfung eine dennoch genügend wirksame Wärmeübertragung auf das Sekundärmedium Luft zu erreichen. Ein jeweils entsprechendes Problem liegt einer Erfindung einer Heizanordnung mit wenigstens einem derartigen Latentwärmespeicher für ein Fahrzeug sowie einem Fahrzeug mit einer derartigen Heizanordnung zugrunde. Ferner liegt entsprechend dem in Patentanspruch 17 angegebenen erfinderischen Verfahren das Problem zugrunde, eine derartige Heizanordnung für ein bedarfsgerechtes Beheizen eines Insassenbereichs eines Fahrzeugs mit Luft als Sekundärmedium zu steuern.

### Zusammenfassung der Erfindung:

Das der im Patentanspruch 1 angegebenen Erfindung zugrundeliegende Problem wird durch einen Latentwärmespeicher gemäß den Merkmalen des Patentanspruchs 1 gelöst. Dadurch dass der Latentwärmespeicher ein Behältnis, mit einem oder mehreren Phasenwechselmaterial/ien als alleiniger oder nahezu alleiniger Bestandteil des Wärmespeichermediums sowie ein oder mehrere elektrisch betreibbare Heizelement(en), wobei zumindest dessen/deren jeweils wirksamer Teil in einem mit dem Wärmespeichermedium befüllten Raumbereich im unteren Teil des Behältnisses angeordnet ist, und ein oder mehrere im Behältnis angeordnete in Wärmeleitverbindung zum Wärmespeichermedium stehenden Wärmeleitstruktur(en), wobei wenigstens eine der Wärmeleitstruktur(en) in Wärmeleitverbindung mit wenigstens einem des/der Heizelement(e) steht, umfasst, und wenigstens die untere Wandung sowie seitliche Wandung zumindest des unteren Teils des Behältnisses eine Wärmeisolierung aufweist, wobei sich im oberen Teil des Behältnisses ein sowohl bei festem wie auch bei flüssigem Aggregatzustand des wenigstens einen Phasenwechselmaterials bestehender Luftraumbereich ohne Wärmespeichermedium befindet, in den vom unteren Teil des Behältnisses wenigstens eine der Wärmeleitstruktur(en) zur Wärmeleitung nach oben mehr als 2 Zentimeter hineinrag(t)/en, und wobei sich in der oberen und/oder seitlichen Begrenzung des oberen Teils des Behältnisses wenigstens ein offener oder wiederverschließbar zu öffnender Bereich für den Lufteintritt in den Luftraumbereich im oberen Teil des Behältnisses und wenigstens ein offener oder wiederverschließbar zu öffnender Bereich für den Luftaustritt aus dem Luftraumbereich befinden, wird das Problem gelöst. Der wirksame Teil eines elektrisch betreibbaren Heizelements ist typischerweise der Teil, von dem zum Beheizen elektrisch erzeugte Wärme an die Umgebung des Heizelements abgegeben wird. Die seitliche Begrenzung des oberen Teils des Behältnisses sind typischerweise die Seitenwände des oberen Teils des Behältnisses. Die obere Begrenzung des oberen Teils des Behältnisses ist typischerweise die Oberseite auf den oberen Rändern der Seitenwände, wie beispielsweise eine obere Abdeckung des Behältnisses, beziehungsweise, wenn keine derartige Oberseite besteht, typischerweise die von den oberen Rändern der Seitenwände aufgespannte gedachte Fläche.

Durch das zumindest eine elektrisch betreibbare Heizelement ist vorteilhaft das Wärmespeichermedium des Latentwärmespeichers allein durch elektrische Energie mit Wärme aufladbar, wobei dadurch, dass wenigstens eine der Wärmeleitstruktur(en) in Wärmeleitverbindung mit wenigstens einem des/der Heizelement(e) steht, vorteilhaft die im Heizelement erzeugte Wärme besser und schneller in das Wärmespeichermedium überführbar ist. Ferner wird vorteilhaft durch die Wärmeisolierung der unteren sowie seitlichen Wandung zumindest des unteren Teils des Behältnisses, in dem sich das Wärmespeichermedium befindet, eine dauerhaftere Wärmespeicherung ermöglicht sowie der Einsatz von Phasenwechselmaterial mit höherer Schmelztemperatur, wie beispielsweise über 70°C, für die Beheizung von Räumen für Personen erleichtert. Ein weiterer Vorteil ist die ohne Rohre für ein Sekundärmedium ermöglichte Wärmeübertragung von im Wärmespeichermedium gespeicherter Wärme an das Sekundärmedium Luft im Luftraumbereich des oberen Teils des Behältnisses. Dadurch wird der Aufwand an Gewicht und Material verringert und die Gefahr einer Rohrverstopfung oder eines Rohrlecks mangels Rohre im Wärmespeichermedium gebannt. Dadurch dass vom unteren Teil des Behältnisses wenigstens eine der Wärmeleitstruktur(en) zur Wärmeleitung nach oben mehr als 2 Zentimeter in den Luftraumbereich hineinrag(t)/en, wird vorteilhaft die Wärmeleitung vom Wärmespeichermedium in den Luftraumbereich verbessert, so dass damit eine genügend wirksame Wärmeübertragung auf die Luft als Sekundärmedium ermöglicht wird, die durch den offenen oder geöffneten Bereich der Begrenzung des oberen Teils des Behältnisses für den Lufteintritt und durch den offenen oder geöffneten Bereich für den Luftaustritt in und aus dem Luftraumbereich des oberen Teils des Behältnisses ein- und wieder ausströmen kann. Die als Sekundärmedium eingesetzte Luft nimmt also im Wärmespeichermedium gespeicherte Wärme auf und dient als so erwärmte Luft direkt zum Beheizen eines Raums beziehungsweise Raumbereichs.

In den Unteransprüchen sind vorteilhafte Ausgestaltungen, Weiterbildungen und Verbesserungen des jeweiligen Gegenstandes der Erfindung angegeben.

Vorzugsweise steht die in den Luftraumbereich des oberen Teils des Behältnisses mehr als 2 Zentimeter hineinragende(n) Wärmeleitstruktur(en) in direkter Wärmeleitverbindung mit wenigstens einem des/der Heizelement(e). Dadurch kann besonders gut Wärme an die Luft als Sekundärmedium im Luftraumbereich übertragen werden. Auch Wärme, die von dem Heizelement beim Heizen nicht ins Wärmespeichermedium übertragen wird, kann so vorteilhaft zum Beheizen des Sekundärmediums Luft genutzt werden.

Gemäß einer vorteilhaften Ausgestaltung des erfindungsgemäßen Latentwärmespeichers ist/sind das/die Heizelement(e) als elektrisch betreibbare(r) Heizstab/Heizstäbe ausgebildet und verläuft/verlaufen horizontal im unteren Teil des Behältnisses. Damit ist die Wärmeübertragung auf das Wärmespeichermedium effektiv und eine recht gleichmäßige Verteilung der Wärmeübertragung ist mit einer solchen Anordnung möglich. Insbesondere in einem quaderförmigen Behältnis des Latentwärmespeichers ist eine derartige Ausgestaltung und Anordnung der Heizelemente gut zu realisieren.

Vorzugsweise sind die in den Luftraumbereich des oberen Teils des Behältnisses mehr als 2 Zentimeter hineinragenden Wärmeleitstrukturen als parallel zueinander ausgerichtete vertikal angeordnete Lamellen ausgeformt. Damit ist eine Wärmeübertragung vom Wärmespeichermedium an die den Luftraumbereich durchströmende Luft besonders effektiv. Als Lamellen für die Wärmeleitung sind beispielsweise dünne gut wärmeleitende Platten denkbar. Insbesondere von Vorteil ist eine Ausgestaltung, bei der der wenigstens eine offene oder wiederverschließbare zu öffnende Bereich für den Lufteintritt und der wenigstens eine offene oder wiederverschließbar zu öffnende Bereich für den Luftaustritt derart angeordnet sind, dass der Luftweg für im Luftraumbereich strömende Luft parallel zu den Ebenen der großen Seitenflächen der als Lamellen ausgeformten Wärmeleitstrukturen verläuft. Dadurch ist ein Luftstrom mit nur geringem Widerstand im Luftraumbereich durch die als Lamellen ausgeformten Wärmeleitstrukturen ermöglicht und dennoch eine wirkungsvolle Wärmeübertragung vom Wärmespeichermedium über die Wärmeleitstrukturen auf die Luft eingerichtet. Beispielsweise befinden sich bei einem quaderförmigen Behältnis die Bereiche für den Lufteintritt und Luftaustritt an sich gegenüberliegenden Seiten der Wandung und die als rechteckige Platten ausgebildeten lamellenförmigen Wärmeleitstrukturen stehen parallel zueinander ausgerichtet mit senkrecht zu diesen sich gegenüberliegenden Seiten der Wandung des Behältnisses ausgerichteten Ebenen der großen rechteckigen Seitenflächen.

Vorzugsweise sind die als Lamellen ausgeformte Wärmeleitstrukturen als Platten aus Metall, wie vorzugsweise Aluminium, ausgebildet und der jeweilige Abstand von benachbarten dieser Wärmeleitstrukturen liegt im Bereich zwischen 1 Millimeter bis 10 Millimeter. Dadurch ist eine besonders effektive Wärmeübertragung vom Wärmemedium in das Sekundärmedium Luft im Luftraumbereich des oberen Teils des Behältnisses bei noch nicht zu hohem Strömungswiderstand für die zu erwärmende Luft im Luftraumbereich ermöglicht.

Nach einer vorteilhaften Weiterbildung des erfindungsgemäßen Latentwärmespeichers ist zwischen dem oberen und unteren Teil des Behältnisses eine Trennwand angeordnet, durch die die in den Luftraumbereich des oberen Teils des Behältnisses hineinragende(n) Wärmeleitstruktur(en) hindurchverläuft/hindurchverlaufen. Damit werden bei weiterhin effektiver Wärmeleitung eventuell entstehende Dämpfe des Wärmespeichermediums von dem Sekundärmedium Luft abgehalten und eventuelle Reaktionen des Sekundärmediums Luft mit dem Wärmespeichermedium verhindert.

Gemäß einer vorteilhaften Weiterbildung weist der erfindungsgemäße Latentwärmespeicher zu dem wiederverschließbar für den Lufteintritt zu öffnenden Bereich des Behältnisses eine zum Öffnen und Wiederschließen steuerbare Luftleiteinrichtung, wie vorzugsweise eine schwenkbare Klappe, auf. Dadurch lässt sich die Menge der in den Luftraumbereich des oberen Teils des Behältnisses eintretenden Luft steuern und so die Wärmeübertragung vom Wärmespeichermedium an das Sekundärmedium Luft regulieren beziehungsweise der Anteil sowie Menge der zum Beheizen im Latentwärmespeicher erwärmten Luft steuern.

Nach einer vorteilhaften Ausgestaltung sind der wenigstens eine offene oder wiederverschließbare zu öffnende Bereich für den Lufteintritt und/oder der wenigstens eine offene oder wiederverschließbare zu öffnenden Bereich für den Luftaustritt an wenigstens einen Luftleitkanalabschnitt angeordnet. Damit verfügt der Latentwärmespeicher über eine verbesserte Luftleitung für in und/oder aus dem Luftraumbereich des oberen Teils des Behältnisses strömende Luft, was eine Integration des Latentwärmespeichers in eine Heizanordnung verbessert.

Eine weitere Verbesserung ist, dass zumindest einer des wenigstens einen Luftleitkanalabschnitts als ein mit der steuerbaren Luftleiteinrichtung zu öffnender und wiederverschießbarer Bypass der Luftleitung zur Luftleitung durch den Luftraumbereich des oberen Teils des Behältnisses ausgebildet ist. Mit einem derartigen Bypass lässt sich die Luftmenge, die durch den Latentwärmespeicher erwärmt wird, und die, die nicht erwärmt durch den Bypass strömt, regeln, so dass für eine Beheizung eines Raums bzw. Raumbereichs der Anteil der zugeführten Luft, der durch den Latentwärmespeicher erwärmt wurde und der Anteil der Luft durch den Bypass regelbar ist. Durch Mischung dieser Anteile der Luft kann beispielsweise vorteilhaft die sonst für die Beheizung zu hohe Temperatur des Anteils der im Latentwärmespeicher erwärmten Luft gesenkt werden.

Gemäß einer vorteilhaften Ausgestaltung des erfindungsgemäßen Latentwärmespeichers umfasst er eine Messeinrichtung zur Bestimmung einer Füllhöhe und/oder der Dichte und/oder einer Temperatur des Wärmespeichermediums, wobei die Messeinrichtung ausgestaltet ist, anhand der Füllhöhe und/oder der Dichte und/oder der Temperatur des Wärmespeichermediums eine durch den Latentwärmespeicher gespeicherte Wärmemenge zu bestimmen. Somit ist die gespeicherte Wärmemenge bekannt, was beispielsweise hilfreich für die Vorausberechnung der Nutzungsdauer und Nutzungsleistung bis zur Entladung des Latentwärmespeichers sowie für die Berechnung der beim Laden zuführbare Wärmemenge ist.

Vorzugsweise ist das zumindest eine Phasenwechselmaterial des erfindungsgemäßen Latentwärmespeichers ein Zuckeralkohol umfassend wenigstens eine der Verbindungen Erythrit, Threit, Xylit, Mannit und/oder Dulcit. Derartige Zuckeralkohole verfügen vorteilhaft über hohe Schmelzenthalpie und nicht übermäßig hohe Schmelztemperaturen. Sie sind ungiftig und nicht besonders reaktiv mit Metallen.

Das der Erfindung einer Heizanordnung mit wenigstens einem derartigen Latentwärmespeicher für ein Fahrzeug zugrundeliegende Problem wird durch eine Heizanordnung gemäß den Merkmalen des Patentanspruchs 13 gelöst. Dadurch, dass die Heizanordnung wenigstens einen erfindungsgemäßen Latentwärmespeicher und wenigstens eine Luftfördereinrichtung umfasst, wobei die wenigstens eine Luftfördereinrichtung zum Fördern von Luft an den oberen Teil des wenigstens einen Latentwärmespeichers oder an wenigstens einen Luftleitkanal angeordnet ist und die Luftleitung von geförderter Luft eingerichtet ist, dass die Luft zumindest zu einem Teil dem Luftraumbereich des oberen Teils des Behältnisses des Latentwärmespeichers zuführbar ist, und im Weiteren die Luftleitung für eine Zuführung der Luft zu einem Insassenbereich eines Fahrzeugs geeignet ist, wird das Problem gelöst. Die Vorteile der erfindungsgemäßen Heizanordnung entsprechen denen zum erfindungsgemäßen Latentwärmespeicher und den zu seinen vorteilhaften Ausführungen angegebenen.

Gemäß einer vorteilhaften Ausführung weist die erfindungsgemäße Heizanordnung eine Steuereinheit zum Steuern der Luftleiteinrichtung, wie vorzugsweise eine schwenkbare Klappe, bezüglich der Größe der Öffnung des für den Lufteintritt zu öffnenden Bereichs des Behältnisses des Latentwärmespeichers auf. Mit dieser Steuereinheit lässt sich der Anteil der Luft, die im Latentwärmespeicher erwärmt wird, steuern und somit die Heizleistung regulieren. Vorzugsweise ist die Steuereinheit eingerichtet, anhand von der Messeinrichtung gemessener Temperatur des Wärmespeichermediums und/oder von der Messeinrichtung bestimmter gespeicherter Wärmemenge und/oder der Ist- und Solltemperatur der Luft des zu beheizenden Raumbereichs und/oder der Temperatur der Luft für die Luftfördereinrichtung und/oder anhand des Wärmebedarfs für den zu beheizenden Raumbereich die der/den Heizelement(en) zuzuführende elektrische Leistung und die dem Luftraumbereich des oberen Teils des Behältnisses des Latentwärmespeichers zuzuführende Luftmenge sowie deren Anteil an der geförderten Luft zu steuern oder nur die dem Luftraumbereich zuzuführende Luftmenge sowie deren Anteil an der geförderten Luft zu steuern. Damit ist vorteilhaft bedarfsgerecht der Anteil der vom Latentwärmespeicher zum Beheizen eines Fahrzeuginsassenbereichs abgegebenen Wärme und somit auch die Temperatur der Luft dafür besonders gut regelbar.

Das der Erfindung eines Fahrzeugs mit wenigstens einem erfindungsgemäßen Latentwärmespeicher und/oder mit einer erfindungsgemäßen Heizanordnung zugrundeliegende Problem wird durch ein Fahrzeug gemäß den Merkmalen des Patentanspruchs 16 gelöst. Die Vorteile des erfindungsgemäßen Fahrzeugs entsprechen denen zum erfindungsgemäßen Latentwärmespeicher und zur erfindungsgemäßen Heizanordnung und jeweils denen zu deren vorteilhaften Ausführungen angegebenen. Insbesondere die Verwendung einer erfindungsgemäßen Heizanordnung zum Beheizen eines Fahrgastbereichs eines Omnibusses mit elektrischem Antrieb ist von Vorteil, denn damit lässt sich die Heizleistung steigern und die Reichweite erhöhen.

Das der Erfindung eines Verfahrens mittels einer erfindungsgemäßen Heizanordnung zugrundeliegende Problem wird durch ein Verfahren gemäß den Merkmalen des Patentanspruchs 17 gelöst. Danach werden vorteilhaft bedarfsgerecht die der/den Heizelement(en) zuzuführende elektrische Leistung und/oder die dem Luftraumbereich im oberen Teil des Behältnisses des Latentwärmespeichers zuzuführende Luftmenge sowie deren Anteil an der geförderten Luft zum Beheizen eines Insassenbereichs eines Fahrzeugs gesteuert. Dadurch ist bedarfsgerecht der Anteil der vom Latentwärmespeicher zum Beheizen eines Fahrzeuginsassenbereichs abgegebenen Wärme und somit auch die Temperatur der Luft dafür besonders gut regelbar.

Schließlich können auch die Merkmale der Unteransprüche bezüglich des erfindungsgemäßen Latentwärmespeichers und bezüglich der erfindungsgemäßen Heizanordnung jeweils innerhalb der demselben Hauptanspruch zugeordneten Unteransprüchen im Wesentlichen frei miteinander und nicht durch die in den Ansprüchen vorliegende Reihenfolge festgelegt kombiniert werden, sofern sie unabhängig voneinander sind.

### Kurze Beschreibung der Zeichnungen:

Anhand der Zeichnungen werden Ausführungsbeispiele der Erfindung erläutert.

### Es zeigen

Figur 1 in perspektivischer Darstellung bei Weglassung von vorderer Seitenwand und Teil der oberen Abdeckung ein Ausführungsbeispiel des Latentwärmespeichers,
Figur 2 im vertikalen Querschnitt senkrecht zur Längsachse ein weiteres Ausführungsbeispiel des Latentwärmespeichers,
Figur 3 im vertikalen Querschnitt senkrecht zur Längsachse ein Ausführungsbeispiel der Heizanordnung mit Latentwärmespeicher, und

Figur 4 im Flussdiagramm ein Ausführungsbeispiel eines Verfahrens zur Steuerung der Heizanordnung mit Latentwärmespeicher.

### Ausführliche Beschreibung der Erfindung:

Alle Zeichnungen sind schematisch zu verstehen. Auf maßstabsgetreue Abbildungen wurde zum Zwecke erhöhter Klarheit der Darstellung verzichtet.

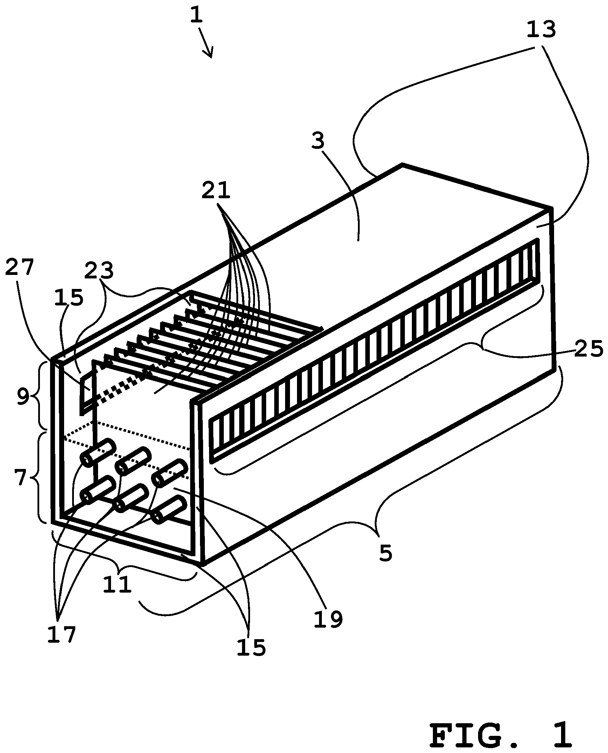

In Figur 1 ist ein Ausführungsbeispiel eines Latentwärmespeichers 1 perspektivisch unter Weglassen der vorderen Seitenwand und Teils der oberen Abdeckung 3 dargestellt. Die obere Abdeckung 3 deckt den Innenraum des quaderförmigen Behältnisses 5 ab. Das Behältnis 5 hat einen unteren Teil 7 und einen oberen Teil 9. Die untere Wandung 11 und die seitliche Wandung 13 des Behältnisses 5 weisen eine Wärmeisolierung 15 in Form einer wärmeisolierenden Schicht, wie beispielsweise ausreichend hitzebeständigen geschäumten Kunststoff, auf. Auch die Abdeckung 3 verfügt über eine derartige wärmeisolierende Schicht. Im unteren Teil 7 des Behältnisses 5 verlaufen in gleichmäßigen Abständen zueinander parallel zur Längsachse des Behältnisses 5 mehrere als Heizstäbe ausgeformte elektrisch betreibbare Heizelemente 17. Sie verlaufen im mit Wärmespeichermedium 19 befüllten Raumbereich im unteren Teil 7 des Behältnisses 5. Sie liegen mit ihrem jeweils wirksamen Teil unterhalb der Oberfläche des Wärmespeichermediums 19 unabhängig vom festen oder flüssigen Aggregatzustand des Phasenwechselmaterials des Wärmespeichermediums 19. Das Wärmespeichermedium 19 besteht in diesem Fall aus dem Zuckeralkohol mit der Verbindung Erythrit. Dieser Zuckeralkohol ist ein Phasenwechselmaterial mit einer Schmelztemperatur von ungefähr 120 °C und einer Schmelzenthalpie pro Volumen von 488 kJ/dm³. Aber auch andere Zuckeralkohole wie die Verbindungen Threit, Xylit, Mannit und/oder Dulcit sind als Phasenwechselmaterialien denkbar. Beispielsweise sind auch Paraffin oder ein Salzhydrat, wie Glaubersalz, als Phasenwechselmaterial als alleiniger Bestandteil des Wärmespeichermediums 19 denkbar. Auch können dem Wärmespeichermedium 19 geringe Mengen eines anderen Materials wie beispielsweise ein Unterkühlungsinhibitor ausgewählt aus Phosphaten, Sulfaten, Pyrophosphaten, Silbersalzen anorganischer Säuren oder Silberhalogeniden beigemischt sein, so dass das Wärmespeichermedium 19 zumindest noch als nahezu alleiniger Bestandteil aus einem oder mehreren Phasenwechselmaterial/ien besteht. In dem Behältnis 5 befinden sich vertikal aufgestellte parallel zueinander angeordnete Lamellen als Wärmeleitstrukturen 21. Die Wärmeleitstrukturen 21 sind in diesem Fall dünne metallische Platten, wie beispielsweise 0,2 Millimeter dicke Bleche oder Aluminiumplatten, mit großen Seitenflächen in rechteckiger Form. Der Abstand von benachbarten Wärmeleitstrukturen 21 beträgt in diesem Fall 4 Millimeter. Es sind auch andere Abstände vorzugsweise zwischen 1 bis 10 Millimeter denkbar. Die Form, Anzahl und Anordnung der Wärmeleitstrukturen 21 ist nicht auf eine derartige Ausgestaltung beschränkt, sondern es sind auch andere geeignete Ausgestaltungen, wie beispielsweise eine Netzstruktur aus gut wärmeleitfähigem Material denkbar. Die Wärmeleitstrukturen 21 sind jeweils mit den als Heizstäbe ausgeformten Heizelementen 17 fest verbunden und stehen so in Wärmeleitverbindung mit den Heizelementen 17. Die Wärmeleitstrukturen 21 stehen mit ihrem unteren Teilbereich im Wärmespeichermedium 19 und ragen mit ihrem oberen Teilbereich über 2 Zentimeter, wie in diesem Ausführungsbeispiel ohne darauf beschränkt zu sein 10 Zentimeter, in den Luftraumbereich 23 im oberen Teil 9 des Behältnisses 5 hinein. Der Luftraumbereich 23 ist sowohl bei festem wie auch bei flüssigem Aggregatzustand des wenigstens einen Phasenwechselmaterials des Wärmespeichermediums 19 ohne Wärmespeichermedium 19 mit Luft gefüllt. Bei den meisten Phasenwechselmaterialien ist die Dichte im festen Aggregatzustand größer als im flüssigen Aggregatzustand, so dass die Füllhöhe des Wärmespeichermediums 19 im Behältnis 5 je nach Aggregatzustand des Phasenwechselmaterials des Wärmespeichermediums 19 unterschiedlich ist. Von daher besteht bei den meisten Phasenwechselmaterialien beziehungsweise Wärmespeichermedien 19 im festen Aggregatzustand im Behältnis 5 ein zusätzlicher normalerweise luftgefüllter Zwischenbereich zwischen Oberfläche des Wärmespeichermediums 19 und dem Luftraumbereich 23. In der einen seitlichen Wandung des oberen Teils 9 des Behältnisses 5, die eine seitliche Begrenzung des oberen Teils 9 darstellt, befindet sich ein offener Bereich 25, der in diesem Ausführungsbeispiel als rechteckige parallel zur Längsachse des Behältnisses 5 langgestreckte Öffnung ausgeformt ist. Dieser offene Bereich 25 ist für den Lufteintritt zum Luftraumbereich 23 im oberen Teil 9 des Behältnisses 5 vorgesehen. Die gegenüberliegende seitliche Wandung des oberen Teils 9 des Behältnisses 5, die auch eine seitliche Begrenzung des oberen Teils 9 bildet, verfügt über einen entsprechend ausgeformten offenen Bereich 27 in gleicher Höhe wie der gegenüberliegende offene Bereich 25. Dieser weitere offene Bereich 27 ist für den Luftaustritt aus dem Luftraumbereich 23 im oberen Teil 9 des Behältnisses 5 vorgesehen. Der eine offene Bereich 25 für den Lufteintritt und der eine offene Bereich 27 für den Luftaustritt sind so in gleicher Höhe sich gegenüberliegend angeordnet, dass der Luftweg für im Luftraumbereich 23 strömende Luft parallel zu den Ebenen der großen Seitenflächen der als Lamellen ausgeformten Wärmeleitstrukturen 21 verläuft.

Es sind auch andere für den Lufteintritt beziehungsweise Luftaustritt geeignete Ausgestaltungen der offenen Bereiche 25 und 27 sowie auch eine höhere Anzahl dieser denkbar.

Bei strömender Luft durch den Luftraumbereich 23 kann also im Wärmespeichermedium 19 gespeicherte Wärme über die Wärmeleitstrukturen 21 geleitet an die strömende Luft als Sekundärmedium übertragen und durch den offenen Bereich 27 aus dem Latentwärmespeicher 1 zum Beheizen eines Raums beziehungsweise eines Raumbereichs heraustransportiert werden.

Die Heizelemente 17 werden elektrisch betrieben wie beispielsweise über einen elektrischen Schnellladeanschluss durch eine elektrische hohe Leistung im Bereich von 5 bis 100 Kilowatt. Wenn der elektrische Strom zum Heizen eingeschaltet ist, beheizen die Heizelemente 17 das Wärmespeichermedium 19 mit einer Temperatur, die über der Schmelztemperatur des Phasenwechselmaterials und unter dessen Siedetemperatur liegt. Beispielsweise bei dem Zuckeralkohol der Verbindung Erythrit mit einer Temperatur von 135 °C. War das Phasenwechselmaterial vorher im festen Aggregatzustand so wird es durch das Beheizen mittels der Heizelemente 17 geschmolzen und nimmt so insbesondere latente Wärme auf. Beim Entladen des Latentwärmespeichers 1 gibt das Wärmespeichermedium 19 gespeicherte insbesondere latente Wärme und normalerweise auch einen Teil der gespeicherten sensiblen Wärme ab und wird somit wieder fest beziehungsweise geht zurück in seine wärmeenergetisch niedrigere Phase. Als elektrische Heizelemente 17 sind auch andere geeignete Arten wie beispielsweise PTC-Heizelemente denkbar.

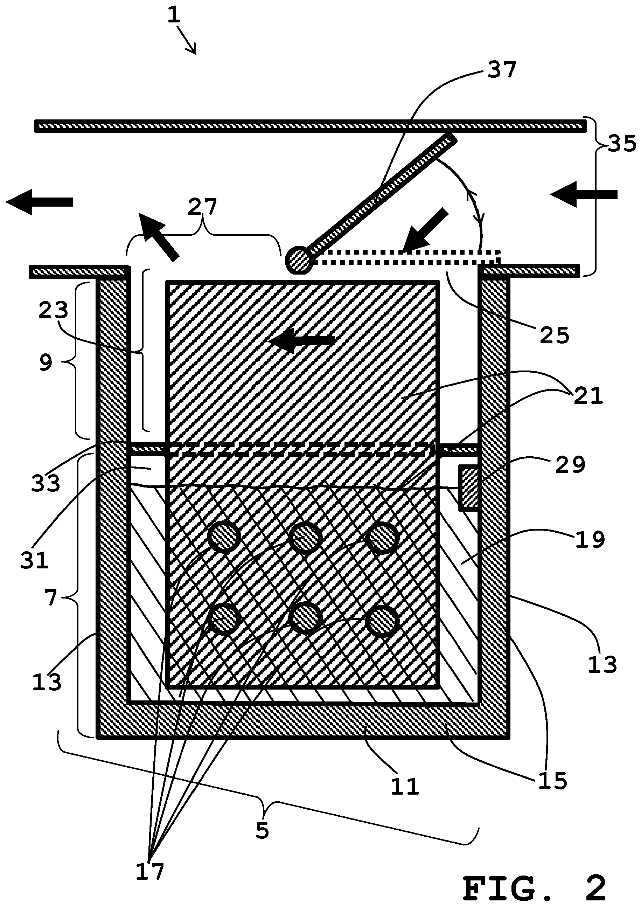

In Figur 2 ist im vertikalen Querschnitt senkrecht zur Längsachse ein weiteres Ausführungsbeispiel des Latentwärmespeichers 1 gezeigt. In dem quaderförmigen Behältnis 5 verlaufen mehrere in seinem unteren Teil 7 parallel zur Längsachse des Latentwärmespeichers 1 als Heizstäbe ausgeformte elektrisch betreibbare Heizelemente 17. Diese Heizelemente 17 liegen zumindest mit ihrem wirksamen Teil im Wärmespeichermedium 19 bestehend aus einem Phasenwechselmaterial wie dem Zuckeralkohol Erythrit. Es sind auch Wärmespeichermedien 19 aus zwei oder mehr Phasenwechselmaterialien denkbar, wie beispielsweise eine Mischung aus den Zuckeralkoholen mit den Verbindungen Dulcit und Mannit. Die untere Wandung 11 und die seitliche Wandung 13 des Behälters 5 sind mit einer Wärmeisolierung 15 wärmeisoliert. Innen an der rechten seitlichen Wandung 13 ist eine Messeinrichtung 29 zur Bestimmung mithilfe entsprechender Sensoren der Füllhöhe, der Dichte und der Temperatur des Wärmespeichermediums 19 installiert. Die Messeinrichtung 29 bestimmt anhand der Füllhöhe, der Dichte und der Temperatur des Wärmespeichermediums 19 die im Latentwärmespeicher 1 gespeicherte Wärmemenge. Über der Oberfläche des Wärmespeichermediums 19 und einem Zwischenraum 31 befindet sich eine horizontale Trennwand 33, die den unteren Teil 7 vom oberen Teil 9 des Behältnisses 5 trennt. Durch diese Trennwand 33 verlaufen jedoch vom mit Wärmespeichermedium 19 befüllten Raumbereich des unteren Teils 7 zum Luftraumbereich 23 des oberen Teils des Behältnisses 5 Wärmeleitstrukturen 21. In diesem Ausführungsbeispiel sind die Wärmeleitstrukturen 21 dünne vertikal aufgestellte Platten aus Aluminium oder einem anderen gut wärmeleitfähigen Metall mit einer rechteckigen Form ihrer großen Seitenflächen. Die Wärmeleitstrukturen 21 stehen mit ihren großen Seitenflächen parallel zur Querschnittfläche der Figur 2. Sie sind mit dem wirksamen Teil der Heizelemente 17 verbunden und stehen damit in direkter Wärmeleitverbindung mit den Heizelementen 17. Gleichzeitig stehen die Wärmeleitstrukturen 21 in Wärmeleitverbindung mit dem Wärmespeichermedium 19 und auch mit der Luft im Luftraumbereich 23 im oberen Teil 9 des Behältnisses 5 über der Trennwand 33. In diesen Luftraumbereich 23 ragen die Wärmeleitstrukturen über 2 Zentimeter wie beispielsweise in diesem Fall mit 15 Zentimeter hinein.

Es sind auch Abwandlungen denkbar, bei denen nur einige zum Beispiel jede zweite der Wärmeleitstrukturen 21 in direkter Wärmeleitverbindung mit ein oder mehreren Heizelementen 17 stehen. Die anderen Wärmeleitstrukturen 21 stehen dabei mit ihrem unteren Teil nur im Wärmespeichermedium 19 und die Wärme wird von dort in ihren oberen Teil, der sich im Luftraumbereich 23 des oberen Teils 9 des Behältnisses 5 befindet, geleitet.

Auf dem Behältnis 5 befindet sich ein Luftleitkanalabschnitt 35 mit horizontaler Längsausrichtung. An der Oberseite des Behältnisses 5 an den Luftleitkanalabschnitt 35 angeordnet befindet sich ein mit einer als schwenkbare Klappe ausgebildeten Luftleiteinrichtung 37 wiederverschließbar zu öffnender Bereich 25. Dieser Bereich 25 ist für Lufteintritt vom Innenbereich des Luftleitkanalabschnitts 35 in den Luftraumbereich 23 des oberen Teils 9 des Behältnisses 5 eingerichtet und mit der steuerbaren Luftleiteinrichtung 37 hinsichtlich des Öffnens und Wiederverschließens regelbar. Der wiederverschließbar zu öffnende Bereich 25 befindet sich also in der oberen Begrenzung des oberen Teils 9 des Behältnisses 5. Links daneben befindet sich in der Oberseite beziehungsweise oberen Begrenzung des oberen Teils 9 des Behältnisses 5 auch an den Luftleitkanalabschnitt 35 angeordnet ein offener Bereich 27 für den Luftaustritt aus dem Luftraumbereich 23 in den Luftleitkanalabschnitt 35.
Der mit Pfeilen in Figur 2 dargestellte Luftweg für strömende Luft führt vom geöffneten Bereich 25 durch den Luftraumbereich 23 zum offenen Bereich 27 parallel zu den Ebenen der großen Seitenflächen der als Lamellen ausgeformten Wärmeleitstrukturen 21. Die steuerbare Luftleiteinrichtung 37 in Form einer schwenkbaren Klappe ist derart steuerbar, dass sie in geöffneter Stellung den Luftweg durch den Luftleitkanalabschnitt 35 verschließt und gleichzeitig den Luftweg durch den Luftraumbereich 23 im oberen Teil 9 des Behältnisses 5 frei gibt. Hingegen verschließt die Luftleiteinrichtung 37 in geschlossener Stellung den Bereich 25 zum Lufteintritt zum Luftraumbereich 23 und gibt gleichzeitig den Luftweg durch den Luftleitkanalabschnitt 35 frei, der also dabei als ein Bypass der Luftleitung zur Luftleitung durch den Luftraumbereich 23 ausgestaltet ist. Auch ist die Luftleiteinrichtung 37 in Form einer schwenkbaren Klappe derart ansteuerbar, dass sie eine Zwischenstellung einnehmen kann, so dass die beiden Luftwege einerseits durch den Luftraumbereich 23 und andererseits durch den Luftleitkanalabschnitt 35 jeweils zu einem einstellbaren Anteil der gesamten Luftleitung geöffnet sind. Somit sind am Ausgang des Luftleitkanalabschnitts 35 Mischungen in je nach Klappenstellung steuerbar unterschiedlichem Mischverhältnis von im Latentwärmespeicher 1 erwärmter Luft und durch den Luftleitkanalabschnitt 35 geströmter nicht erwärmter Luft möglich.

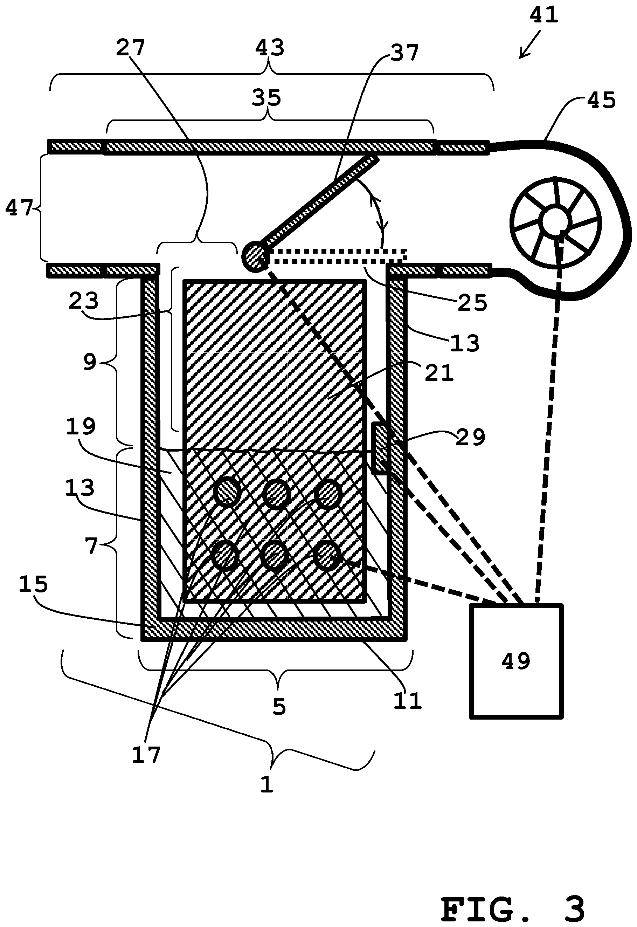

In Figur 3 ist eine im vertikalen Querschnitt senkrecht zur Längsachse ein Ausführungsbeispiel der Heizanordnung 41 mit einem Latentwärmespeicher 1 gezeigt. Der Latentwärmespeicher 1 entspricht bis auf die nicht vorhandene Trennschicht zwischen dem unteren Teil 7 und oberen Teil 9 des Behältnisses 5 dem in Figur 2 samt Bezugszeichen dargestellten. Es wird diesbezüglich auf die Beschreibung zu Figur 2 verwiesen. Die Heizanordnung 41 ist beispielsweise in einem in Figur 3 nicht dargestellten Omnibus mit elektrischem Antrieb zum Beheizen des Fahrzeuginsassenbereichs eingebaut.

Der Luftleitkanalabschnitt 35 ist Abschnitt eines Luftleitkanals 43 an dessen Anfang der Luftauslass einer als Radialgebläse ausgebildeten Luftfördereinrichtung 45 angeschlossen ist. Am anderen Ende des Luftleitkanals 43 befindet sich die Ausströmöffnung 47 für von der Luftfördereinrichtung 45 geförderte Luft. Die Heizelemente 17 im aus Phasenwechselmaterial bestehenden Wärmespeichermedium 19 des Latentwärmespeichers 1 werden elektrisch betrieben. Der elektrische Strom dafür wird bei stehendem Fahrzeug durch einen Anschluss an eine externe Stromquelle, wie beispielsweise eine Schnelladestation, geliefert. Im fahrenden Zustand des Omnibusses erfolgt die Stromversorgung für die Heizelemente 17 insbesondere durch Rekuperation beim Bremsen gewonnener elektrischer Energie.

Die Steuereinheit 49 dient unter anderem zum Steuern der steuerbaren Luftleiteinrichtung 37. Damit wird die Stellung der als schwenkbare Klappe ausgebildeten Luftleiteinrichtung 37 gesteuert und so einerseits die Größe der Öffnung des für den Lufteintritt zu öffnenden Bereichs 25 in der Oberseite beziehungsweise oberen Begrenzung des oberen Teils 9 des Behältnisses 7 des Latentwärmespeichers 1 reguliert. Andererseits wird dadurch auch die Größe der Öffnung für den Bypass der Luftleitung im Luftleitkanalabschnitt 35 gesteuert. Ferner steuert die Steuereinheit 49 die Stärke der Luftförderung durch die Luftfördereinrichtung 45. Also wird mit der Steuereinheit 49 die Fördermenge der Luft für die Beheizung des Fahrzeuginsassenbereichs sowie deren Anteil, der im Luftraumbereich 23 des oberen Teils 9 des Behältnisses 5 des Latentwärmespeichers 1 erwärmt wird, reguliert. Außerdem steuert die Steuereinheit 49 die Beheizung des Wärmespeichermediums 19 mit den elektrischen Heizelementen 17 vor allem nach zur Verfügung stehender elektrischer Leistung und nach der durch die Messeinrichtung 29 bestimmten gespeicherten Wärmemenge im Wärmespeichermedium 19, also nach noch ungenutzter Wärmespeicherkapazität. Die Steuereinheit 49 steuert somit anhand von der Messeinrichtung 29 gemessener Temperatur des Wärmespeichermediums 19, von der Messeinrichtung 29 bestimmter gespeicherter Wärmemenge, anhand der Ist- und Solltemperatur der Luft des zu beheizenden Raumbereichs sowie der Temperatur der Luft für die Luftfördereinrichtung 45 die den Heizelementen 17 zuzuführende elektrische Leistung und die dem Luftraumbereich 23 des oberen Teils 9 des Behältnisses 5 des Latentwärmespeichers 1 zuzuführende Luftmenge sowie deren Anteil an der geförderten Luft. Die Ist-Temperaturwerte als Informationen für die Steuereinheit 49 werden mittels entsprechend dafür üblich gebräuchlicher Temperaturfühler ermittelt. Die Steuereinheit 49 umfasst beispielsweise für die Berechnungen der automatischen Steuerung einen Computerprozessor. Nach einem abgewandelten Ausführungsbeispiel der Heizanordnung 41 steuert die Steuereinheit 49 lediglich die Schwenkstellung der Luftleiteinrichtung 37 und die Stärke der Luftförderung der Luftfördereinrichtung 45. Ferner sind auch Heizanordnungen 41 mit mehreren Latentwärmespeichern 1 und/oder Luftfördereinrichtungen 45 denkbar. Beispielsweise können mehrere Latentwärmespeicher 1 an verschiedenen Stellen im oder in der Nähe des Fahrgastbereichs eines Omnibusses positioniert sein und über Luftleitungskanäle 43 mit ein oder mehreren Luftfördereinrichtungen 45 verbunden sein. Die erfindungsgemäße Heizanordnung 41 kann beispielsweise in ein sonst übliches Heizsystem für den Fahrinsassenbereich eines Omnibusses mit elektrischem Antrieb integriert sein.

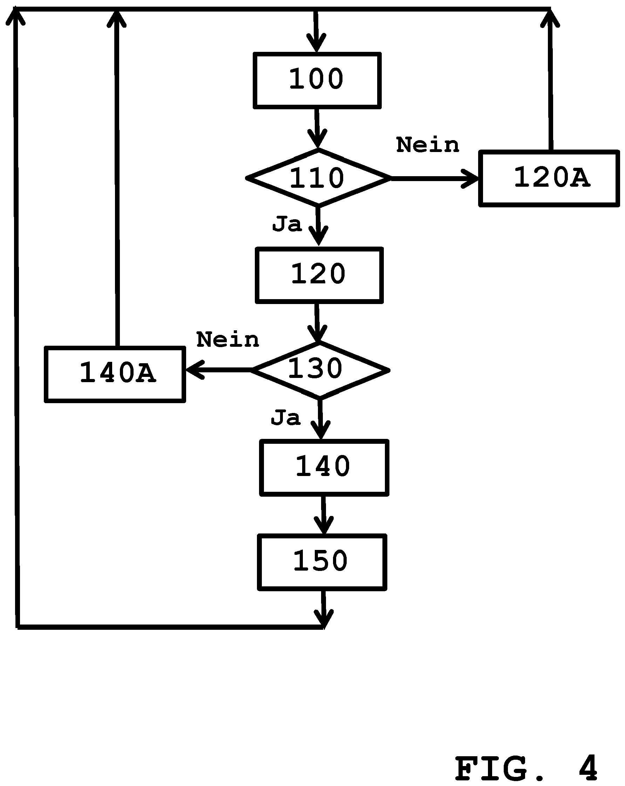

In Figur 4 ist in Flussdiagrammdarstellung ein Ausführungsbeispiel eines Verfahrens zur Steuerung der Heizanordnung mit erfindungsgemäßem Latentwärmespeicher gezeigt. Die Heizanordnung ist beispielsweise eine wie in Figur 3 gezeigte, die zum Beispiel zum Beheizen des Raumbereichs für Fahrgäste eines Omnibusses mit elektrischen Antrieb eingesetzt wird. Im ersten Verfahrensschritt 100 empfängt die Steuereinheit der Heizanordnung von der Messeinrichtung des Latentwärmespeichers die Information, ob für eine Beheizung ausreichende Wärmemenge im Latentwärmespeicher gespeichert ist. Im Verfahrensschritt 110 entscheidet dann die Steuereinheit, falls nicht ausreichend Wärmemenge gespeichert ist ("Nein"), dass soweit verfügbar die elektrisch betreibbaren Heizelemente im Verfahrensschritt 120A zum Beheizen des aus oder nahezu aus Phasenwechselmaterial bestehenden Wärmespeichermedium mit elektrischen Strom versorgt werden. Erst nachdem die im Latentwärmespeicher gespeicherte Wärmemenge zum Beheizen einen ausreichend großen Betrag erreicht hat, startet das Verfahren wieder bei Verfahrensschritt 100. Falls im Verfahrensschritt 110 entschieden wird, dass genügend Wärmemenge im Latentwärmespeicher gespeichert ist ("Ja"), empfängt die Steuereinheit im Verfahrensschritt 120 von entsprechenden Sensoren beziehungsweise der Messeinrichtung die Ist-Temperatur der Luft des zu beheizenden Raumbereichs, die Temperatur der Luft für die Luftfördereinrichtung wie beispielsweise die Umgebungstemperatur des Fahrzeugs und die Temperatur im erfindungsgemäßen Latentwärmespeicher. Anhand dieser Informationen und der gewünschten Soll-Temperatur der Luft des zu beheizenden Raumbereichs entscheidet die Steuereinheit im Verfahrensschritt 130, ob eine Beheizung mit der Heizanordnung notwendig ist ("Ja") oder nicht ("Nein"). Falls die Ist-Temperatur nicht geringer als die Soll-Temperatur für die Luft des zu beheizenden Raumbereichs ist und auch die Temperatur der Luft für die Luftfördereinrichtung nicht geringer ist ("Nein"), stellt die Steuereinheit im Verfahrensschritt 140A die Luftleiteinrichtung, wie beispielsweise eine Klappe, des Latentwärmespeichers so, dass der für den Lufteintritt in den Luftraumbereich des oberen Teils des Latentwärmespeichers zu öffnende Bereich verschlossen und der Bypass der Luftleitung durch den Luftleitkanalabschnitt geöffnet sind. Je nach Lüftungsbedarf wird die Stärke der Luftförderung zusätzlich dabei eingestellt. Die Luft strömt also ohne Erwärmung im Latentwärmespeicher in den zum Beheizen vorgesehenen Raumbereich. Falls jedoch die Ist-Temperatur geringer als die Soll-Temperatur für die Luft des zu beheizenden Raumbereichs ist oder die Temperatur der Luft für die Luftfördereinrichtung geringer als die Solltemperatur ist ("Ja"), steuert die Steuereinheit im Verfahrensschritt 140 die Luftleiteinrichtung des Latentwärmespeichers derart an, dass der für den Lufteintritt in den Luftraumbereich des oberen Teils des Latentwärmespeichers zu öffnende Bereich geöffnet wird und der Bypass der Luftleitung durch den Luftleitkanalabschnitt geschlossen oder zumindest dessen Öffnung verringert wird. Je nach Temperatur im Luftraumbereich des Latentwärmespeichers, der Temperatur der dahinein strömenden Luft und der Höhe der gewünschten Soll-Temperatur wird dabei der Grad der Öffnung des Bereichs für den Lufteintritt in den Luftraumbereich des oberen Teils des Behältnisses des Latentwärmespeichers und entgegengesetzt der Grad der Öffnung des als Bypass ausgebildeten Luftleitkanalabschnitts mit der von der Steuereinheit gesteuerten Luftleiteinrichtung geregelt. Der Anteil der durch den Luftraumbereich des oberen Teils des Behältnisses des Latentwärmespeichers geströmten und damit insbesondere durch Wärmeübertragung an den Wärmeleitstrukturen erwärmten Luft mischt sich nach Austritt durch den zum Luftaustritt vorgesehenen offenen Bereich im oberen Teil des Behältnisses des Latentwärmespeichers mit dem nicht erwärmten Anteil der geförderten Luft, der durch den als Bypass der Luftleitung ausgebildeten Luftleitkanalabschnitt geströmt ist. Je nach Höhe der Temperatur der nach dieser Mischung in den zu heizenden Raumbereich geförderten Luft regelt die Steuereinheit im optionalen Verfahrensschritt 150 entsprechend nach. Je nach Lüftungsbedarf wird die Stärke der Luftförderung zusätzlich durch die Steuereinheit eingestellt.

Nach einer vorbestimmten Zeitspanne von beispielsweise 10 Sekunden beginnt das Verfahren erneut durchzulaufen.

Denkbar sind auch eine Variante des erfindungsgemäßen Verfahrens, bei dem die Steuereinheit eine Heizanordnung mit mehreren erfindungsgemäßen Latentwärmespeichern und mehreren Luftfördereinrichtungen für die jeweils eigens bedarfsgemäße Beheizung und Belüftung mehrerer unterschiedlicher Raumbereiche in einem Fahrzeug, wie beispielsweise die Fahrerkabine und der Fahrgastbereich steuert.

## Patentansprüche

1. Latentwärmespeicher (1) mit einem Behältnis (5), mit einem oder mehreren Phasenwechselmaterial/ien als alleiniger oder nahezu alleiniger Bestandteil des Wärmespeichermediums (19) sowie mit einem oder mehreren elektrisch betreibbaren Heizelement(en) (17), wobei zumindest dessen/deren jeweils wirksamer Teil in einem mit dem Wärmespeichermedium (19) befüllten Raumbereich im unteren Teil (7) des Behältnisses (5) angeordnet ist, und mit einer oder mehreren im Behältnis (5) angeordneten in Wärmeleitverbindung zum Wärmespeichermedium (19) stehenden Wärmeleitstruktur(en) (21), wobei wenigstens die untere Wandung (11) sowie seitliche Wandung (13) zumindest des unteren Teils (7) des Behältnisses (5) eine Wärmeisolierung (15) aufweist, und wobei sich im oberen Teil (9) des Behältnisses (5) ein sowohl bei festem wie auch bei flüssigem Aggregatzustand des wenigstens einen Phasenwechselmaterials bestehender Luftraumbereich (23) ohne Wärmespeichermedium (19) befindet, in den vom unteren Teil (7) des Behältnisses (5) wenigstens eine der Wärmeleitstruktur(en) (21) zur Wärmeleitung nach oben mehr als 2 Zentimeter hineinrag(t)/en, und
sich in der oberen und/oder seitlichen Begrenzung des oberen Teils (9) des Behältnisses (5) wenigstens ein offener oder wiederverschließbar zu öffnender Bereich (25) für den Lufteintritt in den Luftraumbereich (23) im oberen Teil (9) des Behältnisses (5) und wenigstens ein offener oder wiederverschließbar zu öffnender Bereich (27) für den Luftaustritt aus dem Luftraumbereich (23) befinden, **dadurch gekennzeichnet, dass** wenigstens eine der Wärmeleitstruktur(en) (21) in Wärmeleitverbindung mit wenigstens einem des/der Heizelement (e) (17) steht.

2. Latentwärmespeicher (1) nach Anspruch 1, **dadurch gekennzeichnet, dass** die in den Luftraumbereich (23) des oberen Teils (9) des Behältnisses (5) mehr als 2 Zentimeter hineinragende(n) Wärmeleitstruktur(en) (21) in direkter Wärmeleitverbindung mit wenigstens einem des/der Heizelement(e) (17) steht.

3. Latentwärmespeicher (1) nach Anspruch 1 oder 2, **dadurch gekennzeichnet, dass** das/die Heizelement(e) (17) als elektrisch betreibbare(r) Heizstab/Heizstäbe ausgebildet ist/sind und horizontal im unteren Teil (7) des Behältnisses (5) verläuft/verlaufen.

4. Latentwärmespeicher (1) nach einem der Ansprüche 1 bis 3, **dadurch gekennzeichnet, dass** die in den Luftraumbereich (23) des oberen Teils (9) des Behältnisses (5) mehr als 2 Zentimeter hineinragenden Wärmeleitstrukturen (21) als parallel zueinander ausgerichtete vertikal angeordnete Lamellen ausgeformt sind.

5. Latentwärmespeicher (1) nach Anspruch 4, **dadurch gekennzeichnet, dass** der wenigstens eine offene oder wiederverschließbar zu öffnende Bereich (25) für den Lufteintritt und der wenigstens eine offene oder wiederverschließbar zu öffnende Bereich (27) für den Luftaustritt derart angeordnet sind, dass der Luftweg für im Luftraumbereich (23) strömende Luft parallel zu den Ebenen der großen Seitenflächen der als Lamellen ausgeformten Wärmeleitstrukturen (21) verläuft.

6. Latentwärmespeicher (1) nach Anspruch 4 oder 5, **dadurch gekennzeichnet, dass** die als Lamellen ausgeformte Wärmeleitstrukturen (21) als Platten aus Metall, wie vorzugsweise Aluminium, ausgebildet sind und der jeweilige Abstand von benachbarten dieser Wärmeleitstrukturen (21) im Bereich zwischen 1 Millimeter bis 10 Millimeter liegt.

7. Latentwärmespeicher (1) nach einem der Ansprüche 1 bis 6, **dadurch gekennzeichnet, dass** zwischen dem oberen Teil (9) und unteren Teil (7) des Behältnisses (5) eine Trennwand (33) angeordnet ist, durch die die in den Luftraumbereich (23) des oberen Teils (9) des Behältnisses (5) hineinragende(n) Wärmeleitstruktur(en) (21) hindurchverläuft/hindurchverlaufen.

8. Latentwärmespeicher (1) nach einem der Ansprüche 1 bis 7, **dadurch gekennzeichnet, dass** er zu dem wiederverschließbar für den Lufteintritt zu öffnenden Bereich (25) des Behältnisses (5) eine zum Öffnen und Wiederschließen steuerbare Luftleiteinrichtung (37), wie vorzugsweise eine schwenkbare Klappe, aufweist.

9. Latentwärmespeicher (1) nach einem der Ansprüche 1 bis 8, **dadurch gekennzeichnet, dass** der wenigstens eine offene oder wiederverschließbare zu öffnende Bereich (25) für den Lufteintritt und/oder der wenigstens eine offene oder wiederverschließbare zu öffnende Bereich (27) für den Luftaustritt an wenigstens einen Luftleitkanalabschnitt (35) angeordnet sind.

10. Latentwärmespeicher (1) nach Anspruch 9, **dadurch gekennzeichnet, dass** zumindest einer des wenigstens einen Luftleitkanalabschnitts (35) als ein mit der steuerbaren Luftleiteinrichtung (37) zu öffnender und wiederverschießbarer Bypass der Luftleitung zur Luftleitung durch den Luftraumbereich (23) des oberen Teils (9) des Behältnisses (5) ausgebildet ist.

11. Latentwärmespeicher (1) nach einem der Ansprüche 1 bis 10, **dadurch gekennzeichnet, dass** er eine Messeinrichtung (29) zur Bestimmung einer Füllhöhe und/oder der Dichte und/oder einer Temperatur des Wärmespeichermediums (19) umfasst, wobei die Messeinrichtung (29) ausgestaltet ist, anhand der Füllhöhe und/oder der Dichte und/oder der Temperatur des Wärmespeichermediums (19) eine durch den Latentwärmespeicher (1) gespeicherte Wärmemenge zu bestimmen.

12. Latentwärmespeicher (1) nach einem der Ansprüche 1 bis 11, **dadurch gekennzeichnet, dass** das zumindest eine Phasenwechselmaterial des Wärmespeichermediums (19) ein Zuckeralkohol umfassend wenigstens eine der Verbindungen Erythrit, Threit, Xylit, Mannit und/oder Dulcit ist.

13. Heizanordnung (41) für ein Fahrzeug mit wenigstens einem Latentwärmespeicher (1) nach einem der Ansprüche 1 bis 12 und wenigstens eine Luftfördereinrichtung (45), wobei die wenigstens eine Luftfördereinrichtung (45) zum Fördern von Luft an den oberen Teil (9) des wenigstens einen Latentwärmespeichers (1) oder an den wenigstens einen Luftleitkanal (43) angeordnet ist und die Luftleitung von geförderter Luft eingerichtet ist, dass die Luft zumindest zu einem Teil dem Luftraumbereich (23) des oberen Teils (9) des Behältnisses (5) des Latentwärmespeichers (1) zuführbar ist, und im Weiteren die Luftleitung für eine Zuführung der Luft zu einem Insassenbereich eines Fahrzeugs geeignet ist.

14. Heizanordnung (41) nach Anspruch 13, **dadurch gekennzeichnet, dass** sie eine Steuereinheit (49) zum Steuern der Luftleiteinrichtung (37), wie vorzugsweise eine schwenkbare Klappe, bezüglich der Größe der Öffnung des für den Lufteintritt zu öffnenden Bereichs (25) des Behältnisses (5) des Latentwärmespeichers (1) aufweist.

15. Heizanordnung (41) nach Anspruch 14, **dadurch gekennzeichnet, dass** die Steuereinheit (49) eingerichtet ist, anhand von der Messeinrichtung (29) gemessener Temperatur des Wärmespeichermediums (19) und/oder von der Messeinrichtung (29) bestimmter gespeicherter Wärmemenge und/oder anhand der Ist- und Solltemperatur der Luft des zu beheizenden Raumbereichs und/oder der Temperatur der Luft für die Luftfördereinrichtung (45) und/oder anhand des Wärmebedarfs für den zu heizenden Raumbereich die der/den Heizelement(en) (17) zuzuführende elektrische Leistung und die dem Luftraumbereich (23) des oberen Teils (9) des Behältnisses (5) des Latentwärmespeichers (1) zuzuführende Luftmenge sowie deren Anteil an der geförderten Luft zu steuern oder nur die dem Luftraumbereich (23) zuzuführende Luftmenge sowie deren Anteil an der geförderten Luft zu steuern.

16. Fahrzeug mit wenigstens einem Latentwärmespeicher (1) nach einem der Ansprüche 1 bis 12 und/oder mit einer Heizanordnung (41) nach einem der Ansprüche 13 bis 15.

17. Verfahren mittels einer Heizanordnung (41) nach Anspruch 15, wobei die der/den Heizelement(en) (37) zuzuführende elektrische Leistung und/oder die dem Luftraumbereich (23) im oberen Teil (9) des Behältnisses (5) des Latentwärmespeichers (1) zuzuführende Luftmenge sowie deren Anteil an der geförderten Luft zum Beheizen eines Insassenbereichs eines Fahrzeugs gesteuert werden.

## Claims

1. Latent heat store (1) having a container (5), having one or more phase change materials as sole or almost sole constituent part of the heat store medium (19), and having one or more electrically operable heating elements (17), wherein at least the respectively effective part of said heating element(s) is arranged in a space region, filled with the heat store medium (19), in the lower part (7) of the container (5), and having one or more heat-conducting structures (21) which are arranged in the container (5) and which have a heat-conducting connection to the heat store medium (19), wherein
at least the lower wall (11) and lateral wall (13) at least of the lower part (7) of the container (5) has a heat insulator (15), and wherein
an air space region (23) without heat store medium (19) is situated in the upper part (9) of the container (5), which air space region exists both in the solid and in the liquid state of aggregation of the at least one phase change material, and into which air space region, from the lower part (7) of the container (5), at least one of the heat-conducting structures (21) for heat conduction projects upward by more than 2 centimetres, and,
in the upper and/or a lateral delimitation of the upper part (9) of the container (5), there are situated at least one open or re-closably openable region (25) for the entry of air into the air space region (23) in the upper part (9) of the container (5) and at least one open or re-closably openable region (27) for the exit of air out of the air space region (23), **characterized in that** at least one of the heat-conducting structures (21) has a heat-conducting connection to at least one of the heating elements (17).

2. Latent heat store (1) according to Claim 1, **characterized in that** the heat-conducting structure(s) (21) which project(s) into the air space region (23) of the upper part (9) of the container (5) by more than 2 centimetres has a direct heat-conducting connection to at least one of the heating elements (17).

3. Latent heat store (1) according to Claim 1 or 2, **characterized in that** the heating element(s) (17) are/is designed as (an) electrically operable heating rod(s) and run(s) horizontally in the lower part (7) of the container (5) .

4. Latent heat store (1) according to any of Claims 1 to 3, **characterized in that** the heat-conducting structures (21) which project into the air space region (23) of the upper part (9) of the container (5) by more than 2 centimetres are formed as vertically arranged lamellae oriented parallel to one another.

5. Latent heat store (1) according to Claim 4, **characterized in that** the at least one open or re-closably openable region (25) for the entry of air and the at least one open or re-closably openable region (27) for the exit of air are arranged such that the air path for air flowing in the air space region (23) runs parallel to the planes of the large side surfaces of the heat-conducting structures (21) formed as lamellae.

6. Latent heat store (1) according to Claim 4 or 5, **characterized in that** the heat-conducting structures (21) formed as lamellae are formed as plates composed of metal, preferably aluminium, and the respective spacing of adjacent ones of these heat-conducting structures (21) lies in the range between 1 millimetre to 10 millimetres.

7. Latent heat store (1) according to any of Claims 1 to 6, **characterized in that**, between the upper part (9) and lower part (7) of the container (5), there is arranged a partition (33) through which the heat-conducting structure(s) (21) which project(s) into the air space region (23) of the upper part (9) of the container (5) extend(s) .

8. Latent heat store (1) according to any of Claims 1 to 7, **characterized in that**, to form that region (25) of the container (5) which is re-closably openable for the entry of air, said latent heat store has an air guide device (37), such as preferably a pivotable flap, which is controllable for opening and re-closing.

9. Latent heat store (1) according to any of Claims 1 to 8, **characterized in that** the at least one open or re-closably openable region (25) for the entry of air and the at least one open or re-closably openable region (27) for the exit of air are arranged at at least one air guide channel portion (35).

10. Latent heat store (1) according to Claim 9, **characterized in that** at least one of the at least one air guide channel portion (35) is designed as a bypass, which is openable and re-closable by means of the controllable air guide device (37), of the air guidance with respect to the air guidance through the air space region (23) of the upper part (9) of the container (5).

11. Latent heat store (1) according to any of Claims 1 to 10, **characterized in that** said latent heat store comprises a measuring device (29) for determining a fill level and/or the density and/or the temperature of the heat store medium (19), wherein the measuring device (29) is designed to determine a heat quantity stored by the latent heat store (1) on the basis of the fill level and/or the density and/or the temperature of the heat store medium (19).

12. Latent heat store (1) according to any of Claims 1 to 11, **characterized in that** the at least one phase change material of the heat store medium (19) is a sugar alcohol comprising at least one of the compounds erythritol, threitol, xylitol, mannitol and/or dulcitol.

13. Heating arrangement (41) for a vehicle having at least one latent heat store (1) according to any of Claims 1 to 12 and at least one air-conveying device (45), wherein the at least one air-conveying device (45) for conveying air is arranged at the upper part (9) of the at least one latent heat store (1) or at the at least one air guide channel (43) and the air guidance of conveyed air is configured such that the air can be fed at least partially to the air space region (23) of the upper part (9) of the container (5) of the latent heat store (1) and, furthermore, the air guidance is suitable for a feed of the air to a passenger region of a vehicle.

14. Heating arrangement (41) according to Claim 13, **characterized in that** said heating arrangement has a control unit (49) for controlling the air guide device (37), such as preferably a pivotable flap, with regard to the extent of the opening of that region (25) of the container (5) of the latent heat store (1) which is openable for the entry of air.

15. Heating arrangement (41) according to Claim 14, **characterized in that** the control unit (49) is configured to control the electrical power to be fed to the heating element(s) (17) and the air quantity to be fed to the air space region (23) of the upper part (9) of the container (5) of the latent heat store (1), and the fraction of said air quantity in the conveyed air, or only the air quantity to be fed to the air space region (23), and the fraction of said air quantity in the conveyed air, on the basis of the temperature of the heat store medium (19) measured by the measuring device (29) and/or a stored heat quantity determined by the measuring device (29) and/or on the basis of the actual and setpoint temperature of the air of the space region to be heated and/or the temperature of the air for the air conveying device (45) and/or on the basis of the demand for heat for the space region to be heated.

16. Vehicle having at least one latent heat store (1) according to any of Claims 1 to 12 and/or a heating arrangement (41) according to any of Claims 13 to 15.

17. Method by means of a heating arrangement (41) according to Claim 15, wherein the electrical power to be fed to the heating element(s) (37) and/or the air quantity to be fed to the air space region (23) in the upper part (9) of the container (5) of the latent heat store (1), and the fraction of said air quantity in the conveyed air, are controlled for the purposes of heating a passenger region of a vehicle.

## Revendications

1. Accumulateur de chaleur latente (1) comprenant un récipient (5), un ou plusieurs matériaux à changement de phase en tant que constituant unique ou pratiquement unique du milieu accumulateur de chaleur (19) et un ou plusieurs élément(s) chauffant(s) à fonctionnement électrique (17), dont au moins la partie active respective est disposée dans une zone remplie du milieu accumulateur de chaleur (19) dans la partie inférieure (7) du récipient (5), et comprenant une ou plusieurs structure(s) thermoconductrice(s) (21) disposé(es) dans le récipient (5), en liaison thermoconductrice avec le milieu accumulateur de chaleur (19),
au moins la paroi inférieure (11) ainsi que la paroi latérale (13) au moins de la partie inférieure (7) du récipient (5) présentant une isolation thermique (15), et
une zone d'air (23) sans milieu accumulateur de chaleur (19), existant à la fois à l'état solide et à l'état liquide de l'au moins un matériau à changement de phase, se trouvant dans la partie supérieure (9) du récipient (5), dans laquelle zone d'air pénètre(nt) sur plus de 2 cm, à partir de la partie inférieure (7) du récipient (5), au moins l'une de la ou des structure(s) thermoconductrice(s) (21) en vue de guider la chaleur vers le haut, et
au moins une région (25) ouverte ou devant être ouverte de manière à nouveau refermable pour l'entrée d'air dans la zone d'air (23) dans la partie supérieure (9) du récipient (5), et au moins une région (27) ouverte ou devant être ouverte de manière à nouveau refermable pour la sortie d'air hors de la zone d'air (23) se trouvant dans la limite supérieure et/ou latérale de la partie supérieure (9) du récipient (5), **caractérisé en ce qu'**au moins l'une de la ou des structure(s) thermoconductrice(s) (21) est/sont en liaison thermoconductrice avec au moins l'un de l'élément chauffant ou des éléments chauffants (17) .

2. Accumulateur de chaleur latente (1) selon la revendication 1, **caractérisé en ce que** la ou les structure(s) thermoconductrice(s) (21) pénétrant sur plus de 2 cm dans la zone d'air (23) de la partie supérieure (9) du récipient (5) est/sont en liaison thermoconductrice directe avec au moins l'un de l'élément chauffant ou des éléments chauffants (17).

3. Accumulateur de chaleur latente (1) selon la revendication 1 ou 2, **caractérisé en ce que** l'élément chauffant ou les éléments chauffants (17) est/sont réalisé(s) sous forme de barre chauffante/barres chauffantes à fonctionnement électrique et s'étend/s'étendent horizontalement dans la partie inférieure (7) du récipient (5).

4. Accumulateur de chaleur latente (1) selon l'une quelconque des revendications 1 à 3, **caractérisé en ce que** les structures thermoconductrices (21) pénétrant sur plus de 2 cm dans la zone d'air (23) de la partie supérieure (9) du récipient (5) sont réalisées sous forme de lamelles orientées parallèlement les unes aux autres et disposées verticalement.

5. Accumulateur de chaleur latente (1) selon la revendication 4, **caractérisé en ce que** l'au moins une région (25) ouverte ou devant être ouverte de manière à nouveau refermable pour l'entrée d'air et l'au moins une région (27) ouverte ou devant être ouverte de manière à nouveau refermable pour la sortie d'air sont disposées de telle sorte que la voie d'air pour l'air s'écoulant dans la zone d'air (23) s'étende parallèlement aux plans des grandes surfaces latérales des structures thermoconductrices (21) réalisées sous forme de lamelles.

6. Accumulateur de chaleur latente (1) selon la revendication 4 ou 5, **caractérisé en ce que** les structures thermoconductrices (21) réalisées sous forme de lamelles sont réalisées sous forme de plaques en métal, de préférence en aluminium, et la distance respective des structures thermoconductrices adjacentes parmi ces structures thermoconductrices (21) est comprise dans une plage de 1 mm à 10 mm.

7. Accumulateur de chaleur latente (1) selon l'une quelconque des revendications 1 à 6, **caractérisé en ce qu'**entre la partie supérieure (9) et la partie inférieure (7) du récipient (5) est disposée une paroi de séparation (33) à travers laquelle s'étend/s'étendent la ou les structures thermoconductrice(s) (21) pénétrant dans la zone d'air (23) de la partie supérieure (9) du récipient (5).

8. Accumulateur de chaleur latente (1) selon l'une quelconque des revendications 1 à 7, **caractérisé en ce qu'**il présente, vers la région (25) du récipient (5) devant être ouverte de manière à nouveau refermable pour l'entrée d'air, un dispositif de guidage d'air (37) pouvant être commandé pour l'ouverture et la refermeture, tel que de préférence un clapet pivotant.

9. Accumulateur de chaleur latente (1) selon l'une quelconque des revendications 1 à 8, **caractérisé en ce que** l'au moins une région (25) ouverte ou devant être ouverte de manière à nouveau refermable pour l'entrée d'air et/ou l'au moins une région (27) ouverte ou devant être ouverte de manière à nouveau refermable pour la sortie d'air sont disposées au niveau d'au moins une portion de conduit de guidage d'air (35).

10. Accumulateur de chaleur latente (1) selon la revendication 9, **caractérisé en ce qu'**au moins l'une de l'au moins une portion de conduit de guidage d'air (35) est réalisée sous forme de dérivation de la conduite d'air à nouveau refermable et devant être ouverte au moyen du dispositif de guidage d'air commandable (37) pour guider l'air à travers la zone d'air (23) de la partie supérieure (9) du récipient (5) .

11. Accumulateur de chaleur latente (1) selon l'une quelconque des revendications 1 à 10, **caractérisé en ce qu'**il comprend un dispositif de mesure (29) pour déterminer une hauteur de remplissage et/ou la densité et/ou une température du milieu accumulateur de chaleur (19), le dispositif de mesure (29) étant réalisé pour déterminer, à l'aide de la hauteur de remplissage et/ou de la densité et/ou de la température du milieu accumulateur de chaleur (19), une quantité de chaleur accumulée par l'accumulateur de chaleur latente (1).

12. Accumulateur de chaleur latente (1) selon l'une quelconque des revendications 1 à 11, **caractérisé en ce que** l'au moins un matériau à changement de phase du milieu accumulateur de chaleur (19) est un alcool de sucre comprenant au moins l'un des composés érythritol, thréitol, xylitol, mannitol et/ou dulcitol.

13. Système de chauffage (41) pour un véhicule comprenant au moins un accumulateur de chaleur latente (1) selon l'une quelconque des revendications 1 à 12 et au moins un dispositif de refoulement d'air (45), l'au moins un dispositif de refoulement d'air (45) étant disposé pour refouler de l'air au niveau de la partie supérieure (9) de l'au moins un accumulateur de chaleur latente (1) ou au niveau d'au moins un conduit de guidage d'air (43) et la conduite d'air pour l'air refoulé étant prévue de telle sorte que l'air puisse être acheminé au moins en partie à la zone d'air (23) de la partie supérieure (9) du récipient (5) de l'accumulateur de chaleur latente (1) et en outre la conduite d'air est appropriée pour acheminer l'air à une région d'un occupant d'un véhicule.

14. Système de chauffage (41) selon la revendication 13, **caractérisé en ce qu'**il présente une unité de commande (49) pour commander le dispositif de guidage d'air (37), telle que de préférence un clapet pivotant, quant à la taille de l'ouverture de la région (25), devant être ouverte pour l'entrée d'air, du récipient (5) de l'accumulateur de chaleur latente (1).

15. Système de chauffage (41) selon la revendication 14, **caractérisé en ce que** l'unité de commande (49), à l'aide de la température du milieu accumulateur de chaleur (19) mesurée par le dispositif de mesure (29) et/ou de la quantité de chaleur accumulée déterminée par le dispositif de mesure (29) et/ou à l'aide de la température réelle et de consigne de l'air de la zone à chauffer et/ou de la température de l'air pour le dispositif de refoulement d'air (45) et/ou à l'aide du besoin en chaleur pour la zone à chauffer, est prévue pour commander la puissance électrique à acheminer à l'élément chauffant/aux éléments chauffants (17) et la quantité d'air à acheminer à la zone d'air (23) de la partie supérieure (9) du récipient (5) de l'accumulateur de chaleur latente (1) ainsi que leur proportion en air refoulé, ou pour commander seulement la quantité d'air à acheminer à la zone d'air (23) ainsi que sa proportion en air refoulé.

16. Véhicule comprenant au moins un accumulateur de chaleur latente (1) selon l'une quelconque des revendications 1 à 12 et/ou comprenant un système de chauffage (41) selon l'une quelconque des revendications 13 à 15.

17. Procédé au moyen d'un système de chauffage (41) selon la revendication 15, dans lequel la puissance électrique à acheminer à l'élément chauffant/aux éléments chauffants (37) et/ou la quantité d'air à acheminer à la zone d'air (23) dans la partie supérieure (9) du récipient (5) de l'accumulateur de chaleur latente (1) ainsi que sa proportion en air refoulé sont commandées en vue du chauffage d'une région d'un occupant d'un véhicule.
